# EUROPÄISCHE PATENTSCHRIFT

(11) **EP 4 166 800 B1**
(45) Veröffentlichungstag und Bekanntmachung des Hinweises auf die Patenterteilung: **04.12.2024**
(21) Anmeldenummer: 22197063.5
(22) Anmeldetag: 22.09.2022
(51) Int. Cl.: F16B 35/06, F16B 37/12

(54) **VERANKERUNGSELEMENT ZUM VERANKERN IN EINEM BOHRLOCH IN EINEM MATERIAL**
ANCHORING ELEMENT FOR ANCHORING IN A BOREHOLE IN A MATERIAL
ÉLÉMENT D'ANCRAGE POUR ANCRAGE DANS UN TROU DE FORAGE DANS UN MATÉRIAU

(30) Priorität: 15.10.2021 DE 102021211694
(43) Veröffentlichungstag der Anmeldung: 19.04.2023
(73) Patentinhaber: TOGE Dübel GmbH & Co. KG, 90431 Nürnberg (DE)
(72) Erfinder: Gerhard, Andreas, 90427 Nürnberg (DE)
(74) Vertreter: Rau, Schneck & Hübner Patentanwälte Rechtsanwälte PartGmbB

(56) Entgegenhaltungen:
- DE-A1- 102006 003 172
- DE-U1- 202006 021 070
- DE-U1- 29 711 128

## Beschreibung

Die Erfindung betrifft ein Verankerungselement zum Verankern in einem Bohrloch in einem Material, insbesondere in einem harten Material und insbesondere Beton.

DE 20 2006 021 070 U1 offenbart einen Befestigungs-Anker zum Einschrauben in ein Bohrloch sowie eine Anordnung mit einem derartigen Befestigungs-Anker.

DE 297 11 128 U1 betrifft ein selbstbohrendes und gewindeformendes Verbindungselement.

Verankerungselemente zum Verankern in einem Bohrloch in Beton weisen einen Kern mit einem daran ausgebildeten Schneidgewinde auf, mit dem das Verankerungselement unmittelbar in das Bohrloch eingedreht werden kann. Das für das Eindrehen erforderliche Drehmoment wird an einem Drehmomentübertragungsmittel des Verankerungselements eingeleitet. Insbesondere beim Eindrehen des Verankerungselements in einen harten Werkstoff sind große Eindrehdrehmomente erforderlich. Das Drehmomentübertragungsmittel kann an einem Senkkopf ausgebildet sein. Der Senckopf steht an der Außenseite des Bohrlochs gegenüber dem Material vor und bewirkt eine Unebenheit. Diese Unebenheit ist unerwünscht, weil sie zu Beeinträchtigungen führt und ein Verletzungs- und/oder Beschädigungsrisiko darstellt.

Der Erfindung liegt die Aufgabe zugrunde, das Verankern eines Verankerungselements in einem Bohrloch in einem, insbesondere harten, Material zu verbessern und insbesondere die oberflächenbündige Anordnung des Verankerungselements zu gewährleisten.

Diese Aufgabe wird durch ein Verankerungselement mit den Merkmalen des Anspruchs 1 gelöst.

Der Kern der Erfindung besteht darin, dass das Verankerungselement an einer konischen Außenfläche eines Senkkopfs mindestens einen Vorsprung aufweist. Der Vorsprung steht gegenüber der konischen Außenfläche vor.

Beim Eindrehen des Verankerungselements in ein Bohrloch in einem Material, insbesondere in einem harten Material, insbesondere in Beton, reibt der Vorsprung am stirnseitigen, kreisförmigen Bohrlochrand. Mit zunehmender Eindrehtiefe des Verankerungselements bewirkt der mindestens eine Vorsprung eine sich von der Oberfläche des Materials aus erstreckende Vertiefung, die insbesondere der Kontur des Senkkopfs entspricht, insbesondere konisch ausgeführt ist und insbesondere zur Aufnahme, insbesondere zur vollständigen Aufnahme des Senkkopfs ausgeführt ist.

Der mindestens eine Vorsprung ist insbesondere längsstegartig ausgeführt und erstreckt sich insbesondere entlang einer linearen Stegachse, die insbesondere in einer Ebene verläuft, die eine Mittellängsachse des Verankerungselements, insbesondere eines zylindrischen Kerns des Verankerungselements enthält. Der mindestens eine Vorsprung weist eine Vorsprungslänge auf, die entlang der Mittellängsachse orientiert ist und mindestens 50 % der Längserstreckung des Senkkopfs entspricht, insbesondere mindestens 60 %, insbesondere mindestens 70 %, insbesondere mindestens 80 %, insbesondere mindestens 90 % und insbesondere 100 %. Der mindestens eine Vorsprung weist eine gegenüber der konischen Außenfläche erhabene Geometrie auf. Die Geometrie des mindestens einen Vorsprungs ist insbesondere pyramidenartig ausgeführt mit einer polygonen, insbesondere viereckigen, insbesondere rechteckigen und insbesondere quadratischen, Grundfläche und insbesondere jeweils dreieckförmigen Pyramiden-Seitenflächen. Insbesondere sind zwei gegenüberliegend angeordnete Pyramidenseitenflächen identisch.

Der mindestens eine Vorsprung kann auch einen nicht linearen, insbesondere gekrümmten, Verlauf aufweisen.

Durch den vorstehenden Vorsprung wird das Material am Bohrlochrand beim Eindrehen des Verankerungselements abgekratzt, sodass das Verankerungselement vollständig, also inklusive des Senkkopfs, in dem Material versenkt werden kann. Es ist gewährleistet, dass das Verankerungselement zumindest oberflächenbündig in dem Material angeordnet ist. Das Verankerungselement steht mit dem Senkkopf an einer Oberfläche des Materials nicht vor und kann insbesondere gegenüber der Oberfläche des Materials zurückspringen.

Es wurde gefunden, dass das Verankerungselement mit dem Senkkopf an dem Material oberflächenbündig eingedreht werden kann, ohne dass ein zu hoher Druck auf den Bohrlochrand an dem Material ausgeübt wird. Ein zu großer Druck auf den Bohrlochrand könnte zu Materialabplatzungen und damit zu einer unkontrollierten und unerwünschten Vergrößerung der Bohrlochoberfläche führen.

Der mindestens eine Vorsprung ist einstückig an der Außenfläche des Senkkopfs angebracht wird und insbesondere beim Pressen des Senkkopfes einteilig mit angeformt, insbesondere mittels Fließpressen.

Das Verankerungselement ist insbesondere eine Betonschraube. Das Verankerungselement ist aus einem metallischen Werkstoff, insbesondere aus einem Stahlwerkstoff hergestellt, der insbesondere galvanisch verzinkt und/oder zinklamellenbeschichtet ist. Insbesondere ist das Verankerungselement aus einem Werkstoff mit der Bezeichnung 1.4401, 1.4404, 1.4571, 1.4578 und/oder 1.4529 hergestellt. Es sind auch andere metallische, insbesondere Stahlwerkstoffe, möglich.

Das Verankerungselement weist den zylindrischen Kern auf mit einem Einführende, einem diesem gegenüberliegenden Außenende und einer Einschraubrichtung, die von dem Außenende zum Einführende hin orientiert ist. Einstückig mit dem Kern ist ein Schneidgewinde ausgebildet, das sich entlang eines Schneidgewinde-Abschnitts vom Einführende aus erstreckt. Insbesondere ist der Schneidgewinde-Abschnitt als Vollquerschnitt ausgeführt. Dadurch ist die Stabilität des Verankerungselements erhöht. Das Schneidgewinde ist insbesondere ein Außengewinde und ist insbesondere am Kern aufgewalzt. Das Schneidgewinde kann Schneidelemente aufweisen, die das Einschrauben des Verankerungselements in das Bohrloch vereinfachen. Derartige Schneidelemente sind unmittelbar an dem Schneidgewinde angeordnet, beispielsweise aufgewalzt oder daran aufgeschweißt. Die Schneidelemente stehen insbesondere in radialer Richtung an dem Schneidgewinde vor.

Das Verankerungselement weist ein Befestigungsgewinde auf, das insbesondere als Innengewinde und insbesondere als metrisches Innengewinde ausgeführt ist. Das Befestigungsgewinde ist entgegen der Einschraubrichtung nach außen offen und ermöglicht das lösbare Befestigen, insbesondere das Einschrauben eines Befestigungselements, insbesondere einer Befestigungsschraube.

An dem Verankerungselement ist ein Drehmomentübertragungsmittel angeordnet und insbesondere integriert an dem Kern ausgebildet. Das Drehmomentübertragungsmittel dient zum Übertragen eines Eindrehdrehmoments von einem Werkzeug auf den Kern. Das Eindrehdrehmoment ist erforderlich, um das Verankerungselement in das Bohrloch einzudrehen. Das Drehmomentübertragungsmittel ist insbesondere im Bereich des Senkkopfs angeordnet und insbesondere in dem Senkkopf integriert ausgeführt. Aufgrund der Ausgestaltung des Verankerungselements mit Senkkopf weist das Verankerungselement einen vergrößerten Kopfdurchmesser auf, an dem ein maximaler Innendurchmesser des Drehmomentübertragungsmittels angeordnet ist.

Das Verankerungselement ermöglicht eine unkomplizierte und robuste Ausgestaltung des Vorsprungs an der Außenfläche. Der mindestens eine Vorsprung weist eine in Einschraubrichtung veränderlich ausgeführte Vorsprungstiefe auf und gewährleistet ein verbessertes Auskratzen der Bohrlochinnenwand beim Eindrehen des Verankerungselements. Insbesondere weist die Vorsprungstiefe entlang der Einschreibrichtung ein Mamixum auf.Insbesondere weist die Vorsprungstiefe entlang der Einschraubrichtung jeweils ausgehend von den Endflächen des Senkkopfs insbesondere einen linearen Verlauf auf. Insbesondere weist das Verankerungselement in einer Ebene senkrecht zur Mittellängsachse bei dem Maximum der Vorsprungstiefe einen Radius auf, der dem halben Durchmesser der Außenfläche des Senkkopfs entspricht. Dadurch ist gewährleistet, dass der Senkkopf in dem vom Vorsprung ausgekratzten Bereich des Materials versenkt angeordnet ist.

Ein Verankerungselement gemäß Anspruch 2 weist eine verbesserte Kratzwirkung auf. Es ist gewährleistet, dass das Bohrloch ausreichend ausgekratzt wird, um den Senkkopf flächenbündig in dem Material anzuordnen. Die mit den Vorsprüngen ausgekratzte Vertiefung weist ein Volumen auf, das größer ist als das des Senkkopfs. Der Senkkopf kann zuverlässig vollständig innerhalb der Vertiefung angeordnet werden. Das Verankerungselement weist insbesondere drei und insbesondere genau drei Vorsprünge auf. Es können auch mehr als drei, insbesondere vier, fünf, sechs oder sieben oder mehr Vorsprünge angeordnet sein. Die Vorsprünge sind in Umfangsrichtung der Mittellängsachse insbesondere gleichmäßig beabstandet zueinander angeordnet. Es wurde gefunden, dass einerseits die Effektivität beim Materialabtrag mittels der Vorsprünge umso besser ist, je mehr Vorsprünge vorgesehen sind. Dabei wurde insbesondere erkannt, dass das Auskratzen der Materialoberfläche insbesondere bei etwa einer Umdrehung erfolgen muss. Zum anderen darf die Anzahl der Vorsprünge nicht beliebig groß gewählt werden, um zu vermeiden, dass durch eine Vielzahl von Vorsprüngen in Umfangsrichtung eine durchgängige Außenkontur abgebildet wird, was eine reduzierte Kratzwirkung zur Folge hätte.

Ein Verankerungselement gemäß Anspruch 3 weist eine verbesserte Kratzwirkung auf. Eine Vorlaufflanke und eine Nachlaufflanke ermöglichen ein verbessertes Eindrehen des Verankerungselements. Als Vorlaufflanke wird die Flankenfläche verstanden, die beim Eindrehen des Verankerungselements in das Material vorläuft, also zunächst mit dem Material in Kontakt kommt. Als Nachlaufflanke wird diejenige Flankenfläche bezeichnet, die in Einschraubdrehrichtung nachläuft, also im Schatten des Vorsprungs angeordnet ist.

Ein Vorlaufflankenwinkel gemäß Anspruch 4 ermöglicht unterschiedliche Kraftwirkungen. Dabei kann der Vorlaufflankenwinkel vergleichsweise klein gewählt sein und insbesondere zwischen 0° und 15° betragen. Bei einer derartigen Ausgestaltung ist der Vorsprung in der Art eines Meißels ausgebildet, der einen verbesserten Materialabtrag an der Bohrlochinnenwand ermöglicht. Der Vorlaufflankenwinkel kann auch negativ sein.

Es ist auch möglich, dass der Vorlaufflankenwinkel größer ausgeführt ist und insbesondere zwischen 20° und 45° und insbesondere 30° beträgt. Ein derartiger Vorsprung weist eine besonders hohe Stabilität auf.

Ein Verankerungselement gemäß Anspruch 5 mit einem Nachlaufflankenwinkel zwischen 20° und 45°, insbesondere zwischen 25° und 35° und insbesondere von 30° ist robust ausgeführt. Die Nachlaufflanke verleiht dem Verankerungselement eine erhöhte Stabilität. Wenn der Nachlaufflankenwinkel identisch ist mit dem Vorlaufflankenwinkel, der Vorsprung also symmetrische Flanken aufweist, ist die Herstellung des Vorsprungs vereinfacht.

Ein Verankerungselement gemäß Anspruch 6 ist besonders robust ausgeführt und ermöglicht eine platzsparende Integration des Drehmomentübertragungsmittels an dem Verankerungselement. Eine unrunde Innenkontur des Drehmomentübertragungsmittels kann beispielsweise ein polygone Kontur sein, insbesondere eine Innen-Vierkant- oder Innen-Sechskant-Kontur. Die Innenkontur kann auch als Innensechsrund-Kontur ausgeführt sein.

Ein Verankerungselement gemäß Anspruch 7 ermöglicht die unmittelbare Zugänglichkeit des Drehmomentübertragungsmittels. Die Handhabung des Verankerungselements ist dadurch vereinfacht. Das Verankerungselement weist eine robuste und kompakte Konstruktion auf. Insbesondere weist das Befestigungsgewinde einen Gewindedurchmesser auf, der kleiner ist als eine lichte Weite des Drehmomentübertragungsmittels. Das Befestigungselement kann durch das Drehmomentübertragungsmittel durchgesteckt und in das Befestigungsgewinde eingeschraubt werden.

Ein Verankerungselement gemäß Anspruch 8 ermöglicht eine zuverlässige Befestigung eines Gegenstands an dem Befestigungsgewinde. Das Befestigungsgewinde gewährleistet eine ausreichende Gewindetiefe, um das Befestigungselement zuverlässig zu verschrauben.

Ein Verankerungselement gemäß Anspruch 9 ermöglich eine ausreichende Gesamtlänge des Verankerungselements. Insbesondere ist das Befestigungsgewinde entlang der Mittellängsachse zumindest teilweise in dem Senkkopf und/oder in dem Schaftabschnitt angeordnet.

Ein Verankerungselement gemäß Anspruch 10 ermöglicht einen erhöhten Antrieb.

Ein Verankerungselement gemäß Anspruch 11 ermöglicht eine zuverlässige und robuste Befestigung des Befestigungselements.

Sowohl die in den Patentansprüchen angegebenen Merkmale als auch die in den Ausführungsbeispielen erfindungsgemäßer Verankerungselemente angegebene Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine Seitenansicht eines erfindungsgemäßen Verankerungselements mit symmetrisch ausgeführten Vorsprüngen am Senckopf,
- Fig. 2: einen Längsschnitt gemäß Schnittlinie II-II in Fig. 1,
- Fig. 3: eine Ansicht gemäß Pfeil III in Fig. 1,
- Fig. 4: eine Schnittansicht gemäß Schnittlinie IV-IV in Fig. 1,
- Fig. 5: eine Fig. 1 entsprechende Seitenansicht eines Verankerungselements gemäß einer weiteren Ausführungsform,
- Fig. 6: eine Schnittansicht gemäß Schnittlinie VI-VI in Fig. 5.

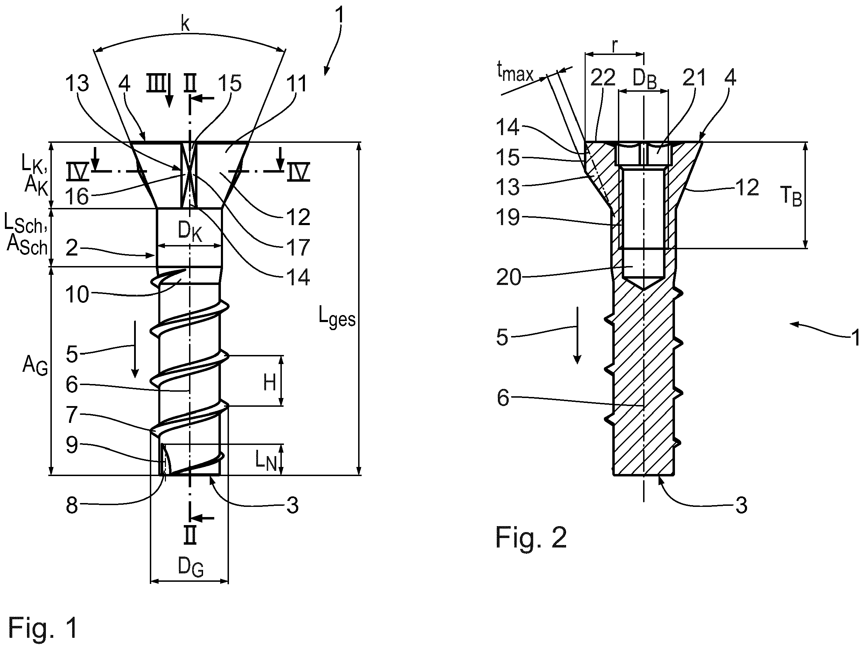

Ein in Fig. 1 bis 4 insgesamt mit 1 gekennzeichnetes Verankerungselement dient zum Verankern in einem Bohrloch in einem Material, insbesondere in einem harten Material, insbesondere Beton.

Das Verankerungselement 1 ist insbesondere eine Betonschraube, insbesondere ein Betondübel.

Das Verankerungselement 1 weist einen zylindrischen Kern 2 auf mit einem Einführende 3 und einem gegenüberliegend angeordneten Außenende 4. Von dem Außenende 4 zu dem Einführende 3 hin ist eine Einschraubrichtung 5 definiert. Parallel zur Einschraubrichtung 5 ist eine Mittellängsachse 6 des Kerns 2 orientiert. Das Verankerungselement 1 weist eine entlang der Mittellängsachse 6 gerichtete Gesamtlänge L_{ges} auf.

Vom Einführende 3 aus erstreckt sich entlang der Mittellängsachse 6 ein Schneidgewinde-Abschnitt A_{G}. Von dem Einführende 3 erstreckt sich entlang des Schneidgewinde-Abschnitts A_{G} ein Schneidgewinde 7. Das Schneidgewinde 7 ist derart ausgeführt, dass das Verankerungselement 1 unmittelbar in das Bohrloch in das Material eingedreht werden kann. Mit dem Schneidgewinde 7 wird an einer Innenwand des Bohrlochs eine Gewindewendel unmittelbar eingeschnitten. Das Schneidgewinde 7 kann nicht näher dargestellte Schneidelemente aufweisen. Das Schneidgewinde 7 weist einen Gewindedurchmesser D_{G} auf. Das Schneidgewinde 7 ist insbesondere einstückig an dem Kern 2 aufgewalzt.

Das Schneidgewinde 7 weist eine Gewindesteigung H auf, die insbesondere kleiner ist als 10 mm, insbesondere kleiner als 8 mm und insbesondere zwischen 6 mm und 7 mm.

Am Einführende 3 weist der Kern 2 mindestens eine Axialnut 8 auf. Die Axialnut 8 weist eine Nutlänge L_{N} auf, die sich entlang der Mittellängsachse 6 erstreckt. Die Nutlänge L_{N} beträgt insbesondere mindestens 30 % der Gewindesteigung H und insbesondere höchstens 200 % der Gewindesteigung H, insbesondere mindestens 50 % und höchstens 150 % der Gewindesteigung H sowie insbesondere mindestens 70 % und höchstens 120 % der Gewindesteigung H. Die Axialnut 8 erstreckt sich von einer unteren Stirnfläche des Kerns 2 entlang einer Nutlängsachse 9. Die Nutlängsachse 9 ist parallel zur Mittellängsachse 6 orientiert. Es ist insbesondere denkbar, dass die Axialnut 8 das Schneidgewinde 7 kreuzt, also insbesondere die Axialnut 8 das Schneidgewinde 7 unterbricht.

Wenn mehrere Axialnuten 8 vorgesehen sind, sind diese in Umfangsrichtung um die Mittellängsachse 6 an der äußeren Mantelfläche des Verankerungselements 1, also an der äußeren Mantelfläche des Kerns 2, beabstandet, insbesondere gleichmäßig in Umfangsrichtung, zueinander angeordnet. Die Axialnuten 8 weisen jeweils eine Nutlängsachse 9 auf, die parallel zur Mittellängsachse 6 orientiert ist. Die Axialnuten 8 sind Außennuten an der äußeren Mantelfläche des Verankerungselements 1. In einer Ebene senkrecht zur Nutlängsachse 9 weist jede Axialnut 8 eine rechteckförmige Querschnittskontur auf. Die Querschnittskontur kann auch in anderer Form ausgeführt sein, insbesondere U-förmig oder V-förmig.

Der Schneidgewinde-Abschnitt A_{G} weist eine Längserstreckung entlang der Mittellängsachse 6 auf, die größer ist als die Gewindesteigung H. Insbesondere ist die Längserstreckung des Schneidgewinde-Abschnitts A_{G} derart festgelegt, dass das Schneidgewinde 7 mehrere vollständige Gewindeumdrehungen aufweist, insbesondere mindestens drei und insbesondere mindestens vier vollständige Umdrehungen. Insbesondere beträgt die Längserstreckung des Schneidgewinde-Abschnitts A_{G} ein ganzzahliges Vielfaches der Gewindesteigung H.

An einem dem Einführende 3 gegenüberliegenden Ende des Schneidgewinde-Abschnitts A_{G} weist dieser einen Übergangsabschnitt 10 auf. Der Übergangsabschnitt 10 ist in Einschraubrichtung 5 konisch verjüngend ausgeführt.

Dem Schneidgewinde-Abschnitt A_{G} schließt sich entgegen der Einschraubrichtung 5 ein gewindefreier Schaftabschnitt A_{Sch} an. Der Schaftabschnitt A_{Sch} ist zylindrisch ausgeführt. Der Schaftabschnitt A_{Sch} weist einen Kerndurchmesser D_{K} auf, der kleiner ist als der Gewindedurchmesser D_{G}. Die Längserstreckung des Schaftabschnitts A_{Sch} entlang der Mittellängsachse 6 ist kleiner als die Längserstreckung des Schneidgewinde-Abschnitts A_{G}. Insbesondere entspricht die Längserstreckung des Schaftabschnitts A_{Sch} etwa der Gewindesteigung H des Schneidgewindes 7.

Entgegen der Einschraubrichtung 5 schließt sich dem Schaftabschnitt A_{Sch} ein Kopfabschnitt A_{K} an. In dem Kopfabschnitt A_{K} ist ein Senkkopf 11 angeordnet, der einen Schraubenkopf bildet. Der Senkkopf 11 ist in Einschraubrichtung 5 konisch verjüngend ausgeführt. Ein Konuswinkel k des Senkkopfs 11 beträgt gemäß dem gezeigten Ausführungsbeispiel 45°. Der Konuswinkel kann auch kleiner als 45° oder größer als 45° sein. Insbesondere beträgt der Konuswinkel k mindestens 30° und höchstens 60°.

Der Kopfabschnitt A_{K} weist eine Längserstreckung entlang der Mittellängsachse 6 auf, die im Wesentlichen der Längserstreckung des Schaftabschnitts A_{Sch} entspricht. Insbesondere beträgt eine Länge L_{K} des Kopfabschnitts zwischen 50 % und 200 % einer Länge L_{Sch} des Schaftabschnitts L_{Sch}, insbesondere zwischen 60 % und 150 % und insbesondere zwischen 80 % und 120 %.

Am Übergang des Schaftabschnitts A_{Sch} zu dem Kopfabschnitt A_{K} weist der Senkkopf 11 den Kerndurchmesser D_{K} auf. Aufgrund der konischen Ausführung wächst der Durchmesser entlang des Kopfabschnitts A_{K} bis zum Außenende 4 hin kontinuierlich an. Ein maximaler Durchmesser Dₘₐₓ des Senkkopfs 11 liegt am Außenende 4 vor. Der Senkkopf 11 weist eine konische Außenfläche 12 auf.

An der Außenfläche 12 sind mehrere Vorsprünge 13 angeordnet. Gemäß dem gezeigten Ausführungsbeispiel sind drei Vorsprünge 13 vorgesehen, die in Umfangsrichtung um die Mittellängsachse 6 an der Außenfläche 12 gleich beabstandet, also mit 120°-Abstand zueinander angeordnet sind. Es können auch mehr oder weniger Vorsprünge 13 an der Außenfläche 12 angeordnet sein. Gemäß dem gezeigten Ausführungsbeispiel sind sämtliche Vorsprünge 13 identisch ausgeführt. Es ist auch möglich, dass mindestens einer der Vorsprünge 13 anders als die anderen und insbesondere sämtliche Vorsprünge 13 unterschiedlich zueinander ausgeführt sind.

Die Vorsprünge 13 sind jeweils stegartig ausgeführt mit einer Steglängsachse 14, die an der Außenfläche 12 angeordnet ist. Die Steglängsachse 14 und die Mittellängsachse 6 definieren eine Radialebene, die der Zeichenebene gemäß Fig. 2 entspricht.

Die Vorsprünge 13 weisen im Wesentlichen eine Pyramidenform auf mit einer rechteckförmigen Grundfläche, die an der Außenfläche 12 des Senckopfes 11 angeordnet ist. Die Vorsprünge 13 weisen eine Vorsprungstiefe t auf, die senkrecht zur Außenfläche 12 orientiert ist. Die Vorsprungstiefe t weist ein Maximum tₘₐₓ auf, das insbesondere an der Spitze der Pyramide angeordnet ist. Von dem Schaftabschnitt A_{Sch} bis zu dem Ort des Maximums tₘₐₓ weist die Vorsprungstiefe t einen linearen Verlauf auf. Vom Außenende 4 zu der Stelle des Maximums tₘₐₓ weist die Vorsprungstiefe insbesondere einen linearen Verlauf auf.

Insbesondere ist das Maximum tₘₐₓ derart gewählt, dass der Senkkopf 11 an dem Maximum tₘₐₓ der Vorsprungstiefe einen Radius r aufweist, der der Hälfte des maximalen Durchmessers Dₘₐₓ entspricht. Insbesondere ist also die sich vom Außenende 4 erstreckende Deckfläche 15 des Vorsprungs 13 parallel zur Mittellängsachse 6 orientiert. Insbesondere ist die Deckfläche 15 senkrecht zur Radialebene gemäß Fig. 2 orientiert.

Der Vorsprung 13 weist bezogen auf die Umfangsrichtung um die Mittellängsachse 6 eine Vorlaufflanke 16 und eine Nachlaufflanke 17 auf. Die Vorlaufflanke 16 liegt bei einer Drehung des Verankerungselements 1 in Einschraubdrehrichtung 18 vorn und kommt insbesondere zuerst mit der Innenwand des Bohrlochs in Kontakt. Die Nachlaufflanke 17 ist bezogen auf die Einschraubdrehrichtung 18 rückwärtig an dem Vorsprung 13 angeordnet, liegt sozusagen im Schatten des Vorsprungs 13 und dient insbesondere zum Stabilisieren des Vorsprungs 13.

Bezogen auf eine Radialrichtung R ist die Vorlaufflanke 16 mit einem Vorlaufflankenwinkel v von 22,5° ausgeführt. Der Vorlaufflankenwinkel v ist insbesondere in einem Bereich von 10° bis 60°, insbesondere 15° bis 45° und insbesondere 20° bis 30° ausgeführt.

Bezogen auf die Radialrichtung R ist die Nachlaufflanke 17 mit einem Nachlaufflankenwinkel n von 22,5° ausgeführt. Der Nachlaufflankenwinkeln ist insbesondere in einem Bereich von 10° bis 60°, insbesondere 15° bis 45° und insbesondere 20° bis 30° ausgeführt.

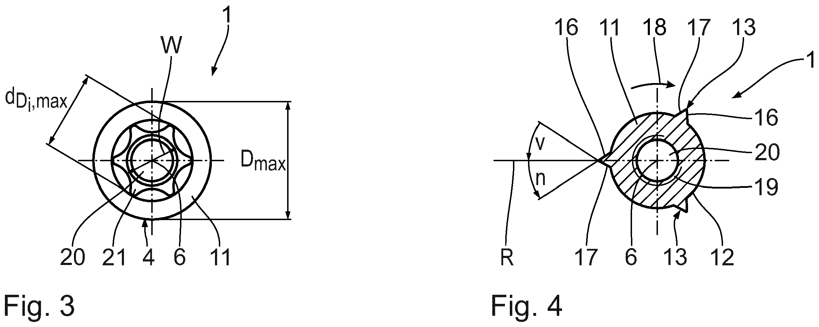

Gemäß dem gezeigten Ausführungsbeispiel sind der Vorlaufflankenwinkel v und der Nachlaufflankenwinkel n identisch. Der Vorsprung 13 ist bezüglich der Radialrichtung R symmetrisch ausgeführt. Der Vorsprung 13 weist in einer Schnittebene senkrecht zur Mittellängsachse 6 die Kontur eines gleichschenkligen Dreiecks auf, wie dies insbesondere in Fig. 4 dargestellt ist.

Insbesondere sind die Vorsprünge 13 derart ausgeführt, dass sie in Radialrichtung R gegenüber dem maximalen Durchmesser Dₘₐₓ nicht vorstehen.

Das Verankerungselement 1 weist ein Befestigungsgewinde 19 auf, das als Innengewinde in einer Sackbohrung 20 ausgeführt ist. Das Befestigungsgewinde 19 ist als Innengewinde, insbesondere als metrisches Innengewinde, ausgeführt und weist eine Befestigungstiefe T_{B} auf, die sich entlang der Mittellängsachse 6 vom Außenende 4 bis zum Ende des Befestigungsgewindes 19 erstreckt.

An dem Befestigungsgewinde 19 kann ein Befestigungselement, insbesondere eine Befestigungsschraube lösbar angebracht, insbesondere angeschraubt, werden. Das Befestigungsgewinde 19 erstreckt sich bis zum Au-ßenende 4, ist also nach außen offen. Das Befestigungsgewinde 19 ist konzentrisch zur Mittellängsachse 6 in dem Verankerungselement 1 angeordnet.

Das Verankerungselement 1 weist ein, insbesondere integriert ausgeführtes, Drehmomentübertragungsmittel 21 auf, das als stirnseitige Vertiefung an dem Außenende 4 ausgeführt ist. Das Drehmomentübertragungsmittel 21 ist eine Vertiefung, die in den Senkkopf 11 eingearbeitet ist. In einer Ebene senkrecht zur Mittellängsachse 6 weist das Drehmomentübertragungsmittel 21 eine unrunde Innenkontur auf, insbesondere eine Innensechsrundkontur.

Entlang der Einschraubrichtung 5 ist das Drehmomentübertragungsmittel 21 vor dem Befestigungsgewinde 19 angeordnet. Das Drehmomentübertragungsmittel weist eine lichte Weite w auf, die senkrecht zur Mittellängsachse 6 orientiert ist. Die lichte Weite w ist größer als der Befestigungsgewindedurchmesser D_{B}.

Das Drehmomentübertragungsmittel 21 weist einen maximalen Innendurchmesser d_{Di, max} auf, der insbesondere durch zwei gegenüberliegende Nasen der Innensechsrundkontur begrenzt ist. Der maximale Innendurchmesser d_{Di, max} ist größer als der Kerndurchmesser D_{K}. Der maximale Innendurchmesser d_{Di, max} ist erforderlich, um ein erforderliches Eindrehdrehmoment mittels des Werkzeugs auf das Verankerungselement 1 übertragen zu können. Entsprechend ist ein vergleichsweise großer Senkkopf 11 erforderlich, um das Drehmomentübertragungsmittel 21 aufzunehmen.

Am Außenende 4 ist eine äußere Stirnfläche 22 angeordnet. Die äußere Stirnfläche 22 bildet die Außenseite des Verankerungselements 1. Die äußere Stirnfläche 22 ist senkrecht zur Mittellängsachse 6 orientiert. Bei einer oberflächenbündigen Anordnung des Verankerungselements 1 ist die äußere Stirnfläche 22 bündig mit einer Oberfläche des Werkstoffs oder darunter angeordnet.

Nachfolgend wird ein Einschraubvorgang des Verankerungselements 1 in ein Bohrloch in einem Werkstoff, insbesondere Beton, beschrieben.

Zunächst wird in dem Werkstoff das Bohrloch mit einem Bohrlochdurchmesser erzeugt. Der Bohrlochdurchmesser ist insbesondere größer als der Kerndurchmesser D_{K} und insbesondere kleiner als der Gewindedurchmesser D_{G}.

Das Verankerungselement 1 wird mit dem Einführende 3 in das Bohrloch eingeführt. Ein Werkzeug wird an dem Drehmomentübertragungsmittel 21 angesetzt und eine Eindrehdrehbewegung 18 von dem Werkzeug auf das Verankerungselement 1 übertragen. Die Drehbewegung des Verankerungselements 1 bewirkt, dass sich dieses selbsttätig in das Bohrloch eindreht, indem das Schneidgewinde 7 eine Gewindewendel in die Innenwand des Bohrlochs schneidet. Mit zunehmender Drehbewegung wird das Verankerungselement 1 in das Bohrloch eingedreht. Wenn das Verankerungselement 1 mit dem Senkkopf 11 und der konischen Außenfläche 12 an der Oberfläche des Werkstoffs ankommt, existiert zunächst ein Eindrehwiderstand, der ein weiteres Eindrehen des Verankerungselements 1 in das Bohrloch behindert.

Dadurch, dass an der Außenfläche 12 die Vorsprünge 13 vorgesehen sind, wird mit der weiteren Drehbewegung das Bohrloch ausgekratzt. Insbesondere mit den Vorlaufflanken 16 der Vorsprünge 13 wird das Material, das den außenliegenden Bohrlochrand umgibt, abgetragen. Durch die Vorsprünge 13 an der Außenfläche 12 des Senkkopfs 11 wird das Bohrloch ähnlich einem Kegelsenkbohrer gesenkt. Dadurch ist es möglich, dass das Verankerungselement 1 an dem Material oberflächenbündig, also versenkt, angeordnet werden kann. Das Verankerungselement 1 steht an dem Werkstoff in axialer Richtung nicht vor.

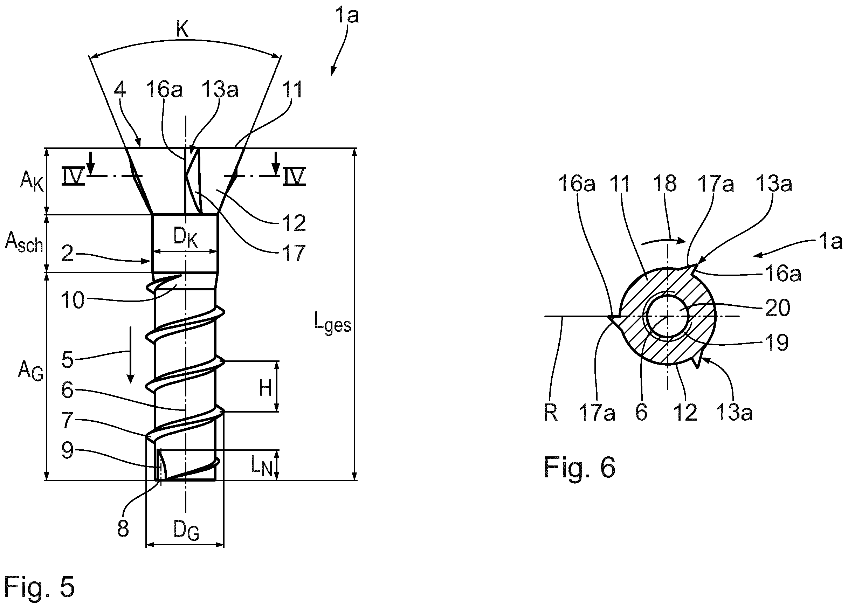

Im Folgenden wir unter Bezugnahme auf Fig. 5 und 6 eine weitere Ausführungsform beschrieben. Konstruktiv identische Teile erhalten dieselben Bezugszeichen wie bei der vorherigen Ausführungsform, auf deren Beschreibung hiermit verwiesen wird. Konstruktiv unterschiedliche, jedoch funktionell gleichartige Teile erhalten dieselben Bezugszeichen mit einem nachgestellten a.

Ein Unterschied des Verankerungselements 1a gegenüber der vorherigen Ausführungsform besteht in der Ausgestaltung der Vorsprünge 13a, insbesondere dem Vorlaufflankenwinkel v an der Vorlaufflanke 16a. Gemäß dem gezeigten Ausführungsbeispiel beträgt der Vorlaufflankenwinkel v 0°.

Gemäß dem gezeigten Ausführungsbeispiel sind die Vorsprünge 13a jeweils meißelartig ausgeführt. Dadurch ist der Materialabtrag beim Eindrehen des Verankerungselements 1a verbessert, insbesondere vergrößert. Vorteilhaft ist, wenn der Vorlaufflankenwinkel kleiner ist als 15°, insbesondere kleiner ist als 10° und insbesondere kleiner ist als 5°. Der Vorlaufflankenwinkel kann auch negativ sein, also bzgl. der Radialrichtung R der Nachlaufflanke 17a zugewandt sein. In diesem Fall weist der Vorsprung 13a einen Rücksprung in der Schnittebene gemäß Fig. 6 auf. Bei negativem Vorlaufflankenwinkel v ist der Vorsprung 13a sägezahnartig ausgeführt.

## Patentansprüche

1. Verankerungselement zum Verankern in einem Bohrloch in einem Material, wobei das Verankerungselement (1; 1a) umfasst
a. einen zylindrischen Kern (2) mit
i. einem Einführende (3),
ii. einem diesem gegenüberliegenden Außenende (4),
iii. einer Einschraubrichtung (5), die vom Außenende (4) zum Einführende (3) orientiert ist,
iv. einer zur Einschraubrichtung (5) parallel orientierten Mittellängsachse (6),
b. ein einstückig mit dem Kern (2) ausgebildetes, sich vom Einführende (3) entlang eines Schneidgewinde-Abschnitts (A_{G}) erstreckendes Schneidgewinde (7) zum Eindrehen desselben in das Bohrloch,
c. ein im Kern (2) angeordnetes, entgegen der Einschraubrichtung (5) nach außen offenes Befestigungsgewinde (19) zum Befestigen eines Befestigungselements,
d. ein am Kern (2) angeordnetes Drehmomentübertragungsmittel (21) zum Übertragen eines Eindrehdrehmoments von einem Werkzeug auf den Kern (2),
e. einen am Außenende (4) angeordneten Senkkopf (11), dessen Au-ßenfläche (12) sich entlang der Einschraubrichtung (5) konisch verjüngt,
**gekennzeichnet durch**
f. mindestens einen an der Außenfläche (12) angeordneten Vorsprung (13; 13a), wobei der mindestens eine Vorsprung (13; 13a) eine senkrecht zur Außenfläche (12) orientierte Vorsprungstiefe (t) aufweist, die entlang der Einschraubrichtung (5) veränderlich ist.

2. Verankerungselement gemäß Anspruch 1, **gekennzeichnet durch** mehrere, insbesondere identisch ausgeführte, Vorsprünge (13; 13a), die insbesondere in Umfangsrichtung der Mittellängsachse (6) beabstandet zueinander, insbesondere gleichmäßig beabstandet, angeordnet sind.

3. Verankerungselement gemäß einem der vorstehenden Ansprüche, **dadurch gekennzeichnet, dass** der mindestens eine Vorsprung (13; 13a) bezogen auf eine Einbschraubdrehrichtung (18) eine Vorlaufflanke (16; 16a) und eine Nachlaufflanke (17; 17a) aufweist.

4. Verankerungselement gemäß Anspruch 3, **dadurch gekennzeichnet, dass** die Vorlaufflanke (16; 16a) mit einem Vorlaufflankenwinkel (v) von -15° bis 15° oder von 20° bis 45° gegenüber einer Radialrichtung (R) der Mittellängsachse (6) orientiert ist.

5. Verankerungselement gemäß Anspruch 3 oder 4, **dadurch gekennzeichnet, dass** die Nachlaufflanke (17; 17a) mit einem Nachlaufflankenwinkel (n) von 20° bis 45° gegenüber einer Radialrichtung (R) der Mittellängsachse (6) orientiert ist.

6. Verankerungselement gemäß einem der vorstehenden Ansprüche, **dadurch gekennzeichnet, dass** das Drehmomentübertragungsmittel (21) konzentrisch zur Mittellängsachse (6) angeordnet ist und eine, in einer Ebene senkrecht zur Mittellängsachse (6), unrunde Innenkontur aufweist.

7. Verankerungselement gemäß einem der vorstehenden Ansprüche, **dadurch gekennzeichnet, dass** entlang der Einschraubrichtung (5) das Drehmomentübertragungsmittel (21) vor dem Befestigungsgewinde (19) angeordnet ist.

8. Verankerungselement gemäß einem der vorstehenden Ansprüche, **dadurch gekennzeichnet, dass** das Befestigungsgewinde (19) eine Gewindetiefe aufweist, die mindestens 20% der Gesamtlänge (L_{ges}) des Verankerungselements (1; 1a) beträgt, insbesondere mindestens 25%, insbesondere mindestens 30%, insbesondere mindestens 35%, insbesondere mindestens 40%, insbesondere mindestens 45%, insbesondere mindestens 50% und insbesondere höchstens 90%.

9. Verankerungselement gemäß einem der vorstehenden Ansprüche, **gekennzeichnet durch** einen am Kern (2) ausgebildeten gewindefreien Schaftabschnitt (A_{Sch}), der entlang der Einschraubrichtung (5) zwischen dem Senkkopf (11) und dem Schneidgewinde-Abschnitt (A_{G}) angeordnet ist.

10. Verankerungselement gemäß einem der vorstehenden Ansprüche, **dadurch gekennzeichnet, dass** das Drehmomentübertragungsmittel (21) einen maximalen Innendurchmesser (d_{Di,max}) aufweist, der größer ist als ein Kerndurchmesser (D_{K}) des Verankerungselements (1; 1a).

11. Verankerungselement gemäß einem der vorstehenden Ansprüche, **dadurch gekennzeichnet, dass** das Befestigungsgewinde (19) einen maximalen Innendurchmesser (D_{B}) aufweist, der mindestens 60% eines Kerndurchmessers (D_{K}) des Verankerungselements (1; 1a) beträgt, insbesondere mindestens 70%, insbesondere mindestens 75%, insbesondere mindestens 80%, insbesondere mindestens 85% und insbesondere höchstens 95%.

## Claims

1. Anchoring element for anchoring in a borehole in a material, the anchoring element (1; 1a) comprising
a. a cylindrical core (2) having
i. an insertion end (3),
ii. an opposite outer end (4),
iii. a screw-in direction (5) orientated from the outer end (4) to the insertion end (3),
iv. a central longitudinal axis (6) orientated parallel to the screw-in direction (5),
b. a cutting thread (7), formed integrally with the core (2) and extending from the insertion end (3) along a cutting thread portion (A_{G}), for screwing this into the borehole,
c. a fixing thread (19), arranged in the core (2) and open outwards counter to the screw-in direction (5), for fixing a fixing element,
d. a torque transmission means (21), arranged on the core (2), for transmitting a screw-in torque from a tool to the core (2),
e. a countersunk head (11), which is arranged on the outer end (4) and of which the outer face (12) tapers conically along the screw-in direction (5),
**characterised by**
f. at least one projection (13; 13a) arranged on the outer face (12), the at least one projection (13; 13a) having a projection depth (t), orientated perpendicular to the outer face (12), which is variable along the screw-in direction (5).

2. Anchoring element according to claim 1, **characterised by** a plurality of, in particular identically configured, projections (13; 13a), arranged mutually spaced apart, in particular uniformly spaced apart, in particular in the circumferential direction of the central longitudinal axis (6).

3. Anchoring element according to any of the preceding claims, **characterised in that** the at least one projection (13; 13a) has a leading edge (16; 16a) and a trailing edge (17; 17a) in terms of the screw-in rotation direction (18).

4. Anchoring element according to claim 3, **characterised in that** the leading edge (16; 16a) is orientated at a leading edge angle (v) of -15° to 15° or of 20° to 45° to a radial direction (R) of the central longitudinal axis (6).

5. Anchoring element according to either claim 3 or claim 4, **characterised in that** the trailing edge (17; 17a) is orientated at a trailing edge angle (n) of 20° to 45° to a radial direction (R) of the central longitudinal axis (6).

6. Anchoring element according to any of the preceding claims, **characterised in that** the torque transmission means (21) is arranged concentric with the central longitudinal axis (6) and has an internal contour which is non-round in a plane perpendicular to the central longitudinal axis (6).

7. Anchoring element according to any of the preceding claims, **characterised in that** the torque transmission means (21) is arranged upstream from the fixing thread (19) along the screw-in direction (5).

8. Anchoring element according to any of the preceding claims, **characterised in that** the fixing thread (19) has a thread depth which is at least 20% of the total length (L_{ges}) of the anchoring element (1; 1a), in particular at least 25%, in particular at least 30%, in particular at least 35%, in particular at least 40%, in particular at least 45%, in particular at least 50%, and in particular at most 90%.

9. Anchoring element according to any of the preceding claims, **characterised by** an unthreaded shaft portion (A_{Sch}), formed on the core (2) and arranged between the countersunk head (11) and the cutting thread portion (A_{G}) along the screw-in direction (5).

10. Anchoring element according to any of the preceding claims, **characterised in that** the torque transmission means (21) has a maximum internal diameter (d_{Di,max}) which is greater than a core diameter (D_{K}) of the anchoring element (1; 1a).

11. Anchoring element according to any of the preceding claims, **characterised in that** the fixing thread (19) has a maximum internal diameter (D_{B}) which is at least 60% of a core diameter (D_{K}) of the anchoring element (1; 1a), in particular at least 70%, in particular at least 75%, in particular at least 80%, in particular at least 85% and in particular at most 95%.

## Revendications

1. Élément d'ancrage destiné à être ancré dans un trou de forage dans un matériau, l'élément d'ancrage (1 ; 1a) comprenant :
a. un noyau cylindrique (2) ayant
i. une extrémité d'introduction (3),
ii. une extrémité extérieure (4) opposée à celle-ci,
iii. une direction de vissage (5) qui est orientée de l'extrémité extérieure (4) vers l'extrémité d'introduction (3),
iv. un axe longitudinal central (6) orienté parallèlement à la direction de vissage (5),
b. un filet de coupe (7) formé d'une seule pièce avec le noyau (2) et s'étendant depuis l'extrémité d'introduction (3) le long d'une section de filet de coupe (A_{G}) pour visser celui-ci dans le trou de forage,
c. un filet de fixation (19) disposé dans le noyau (2), ouvert vers l'extérieur à l'encontre de la direction de vissage (5), pour fixer un élément de fixation,
d. un moyen de transmission de couple (21) disposé sur le noyau (2) pour transmettre un couple de vissage d'un outil au noyau (2),
e. une tête fraisée (11) disposée à l'extrémité extérieure (4), dont la surface extérieure (12) se rétrécit de manière conique le long de la direction de vissage (5),
**caractérisé par**
f. au moins une saillie (13 ; 13a) disposée sur la surface extérieure (12), ladite au moins une saillie (13 ; 13a) présentant une profondeur de saillie (t) orientée perpendiculairement à la surface extérieure (12), qui est variable le long de la direction de vissage (5).

2. Élément d'ancrage selon la revendication 1, **caractérisé par** plusieurs saillies (13 ; 13a), en particulier réalisées de manière identique, qui sont espacées les unes des autres, en particulier régulièrement espacées, dans la direction périphérique de l'axe longitudinal central (6).

3. Élément d'ancrage selon l'une des revendications précédentes, **caractérisé en ce que** ladite au moins une saillie (13 ; 13a) présente, par rapport à un sens de rotation de vissage (18), un flanc d'attaque (16 ; 16a) et un flanc de fuite (17 ; 17a).

4. Élément d'ancrage selon la revendication 3, **caractérisé en ce que** le flanc d'attaque (16 ; 16a) est orienté avec un angle de flanc d'attaque (v) de -15° à 15° ou de 20° à 45° par rapport à une direction radiale (R) de l'axe longitudinal central (6).

5. Élément d'ancrage selon la revendication 3 ou 4, **caractérisé en ce que** le flanc de fuite (17 ; 17a) est orienté avec un angle de flanc de fuite (n) de 20° à 45° par rapport à une direction radiale (R) de l'axe longitudinal central (6).

6. Élément d'ancrage selon l'une des revendications précédentes, **caractérisé en ce que** le moyen de transmission de couple (21) est disposé concentriquement à l'axe longitudinal central (6) et présente un contour intérieur non circulaire dans un plan perpendiculaire à l'axe longitudinal central (6).

7. Élément d'ancrage selon l'une des revendications précédentes, **caractérisé en ce que** le moyen de transmission de couple (21) est disposé en amont du filet de fixation (19) le long de la direction de vissage (5).

8. Élément d'ancrage selon l'une des revendications précédentes, **caractérisé en ce que** le filet de fixation (19) présente une profondeur de filet qui représente au moins 20 % de la longueur totale (L_{ges}) de l'élément d'ancrage (1 ; 1a), en particulier au moins 25 %, en particulier au moins 30 %, en particulier au moins 35 %, en particulier au moins 40 %, en particulier au moins 45 %, en particulier au moins 50 % et en particulier au plus 90 %.

9. Élément d'ancrage selon l'une des revendications précédentes, **caractérisé par** une section de tige non filetée (A_{Sch}) formée sur le noyau (2) et disposée le long de la direction de vissage (5) entre la tête fraisée (11) et la section de filet de coupe (A_{G}).

10. Élément d'ancrage selon l'une des revendications précédentes, **caractérisé en ce que** le moyen de transmission de couple (21) présente un diamètre intérieur maximal (d_{Di,max}) qui est supérieur à un diamètre de noyau (D_{K}) de l'élément d'ancrage (1 ; 1a).

11. Élément d'ancrage selon l'une des revendications précédentes, **caractérisé en ce que** le filet de fixation (19) présente un diamètre intérieur maximal (D_{B}) qui représente au moins 60 % d'un diamètre de noyau (D_{K}) de l'élément d'ancrage (1 ; 1a), en particulier au moins 70 %, en particulier au moins 75 %, en particulier au moins 80 %, en particulier au moins 85 % et en particulier au plus 95 %.
